# EUROPÄISCHE PATENTANMELDUNG

(11) **EP 0 659 625 A1**
(43) Veröffentlichungstag der Anmeldung: **28.06.1995**
(21) Anmeldenummer: 94118829.4
(22) Anmeldetag: 30.11.1994
(51) Int. Cl.: B61D 41/04, G08B 5/22

(54) **Platzreservierungsanzeige**

(30) Priorität: 27.12.1993 DE 4344710
(71) Anmelder: AEG Sensorsysteme GmbH, D-69469 Weinheim (DE); AEG Schienenfahrzeuge GmbH, D-16761 Hennigsdorf (DE)
(72) Erfinder: Strietzel, Rainer, D-69123 Heidelberg (DE); Lücke, Horst, D-12357 Berlin (DE); Müller, Thomas, D-10629 Berlin (DE)
(74) Vertreter: Erbacher, Alfons, Dipl.-Ing.

(57) **Zusammenfassung**

Gegenstand der Erfindung ist ein System zur Anzeige von Informationen über die Belegung oder Nichtbelegung von reservierbaren Sitzplätzen in Personenbeförderungsmitteln (17).
An oder nahe an den Sitzplätzen (19...30) sind jeweils zur Anzeige alphanumerischer Daten durch elektrische Signale betätigbare Anzeigefelder (1; 31...42) vorgesehen, die je mit einer eine eigene Adresse aufweisenden Steuereinheit (7) verbunden sind. Eine Sendeeinheit gibt unter den Adressen die anzuzeigenden Daten über die Belegung oder Nichtbelegung des jeweiligen Sitzplatzes aus.

## Beschreibung

Die Erfindung bezieht sich auf ein System zur Anzeige von Informationen über die Belegung oder Nichtbelegung von reservierbaren Sitzplätzen in Personenbeförderungsmitteln.

Bei Personenzügen, die im Fernverkehr eingesetzt werden, wird ein Sitzplatzreservierungsservice angeboten. In den Eisenbahnwagen befinden sich über den Sitzen Taschen mit durchsichtigen Frontscheiben. In die Taschen werden Zettel eingesteckt, welche die Belegung anzeigen. Die Zettel müssen manuell angebracht und wieder entfernt werden. Bei Zügen mit zahlreichen Wagen ist damit ein hoher Aufwand verbunden.

Der Erfindung liegt nun das Problem zugrunde, ein System zur Anzeige von Informationen über die Belegung oder Nichtbelegung von reservierbaren Sitzplätzen in Personenbeförderungsmitteln zu entwickeln, das ohne auswechselbare Datenträger arbeitet.

Das Problem wird erfindungsgemäß dadurch gelöst, daß an oder nahe an den Sitzplätzen jeweils zur Anzeige alphanumerischer Daten durch elektrische Signale betätigbare Anzeigefelder vorgesehen sind, die je mit einer eine eigene Adresse aufweisenden Steuereinheit verbunden sind, der von einer Sendeeinheit unter ihrer Adresse die anzeigenden Daten über die Belegung oder Nichtbelegung des jeweiligen Sitzplatzes zugeführt werden und daß die Sendeeinheit in einem für sich bewegbaren Personenbeförderungsmittel angeordnet ist und Eingabeelemente für die Belegungsdaten enthält.

Bei dieser Anordnung wird die Sitzplatzbelegung für das jeweilige Transportmittel in eine zentrale Einheit, z. B. in Form eines Belegungsplans, eingegeben und gespeichert. Die zentrale Einheit stellt aus dem Belegungsplan die für die einzelnen Sitzplätze bestimmten Anzeigedaten zusammen und überträgt sie über wenigstens eine Sendeeinheit im Wagen an die Steuereinheiten der Anzeigefelder. Die Steuereinheiten wiederum legen an die Anzeigefelder die entsprechenden Signale an. Die anzuzeigenden Daten können immer auf dem aktuellen Stand gehalten werden, ohne daß die Anzeigefelder von einer Person aufgesucht werden müssen. Überdies können die anzuzeigenden Daten schnell und einfach geändert werden.

Bei einer bevorzugten Ausführungsform sind die Anzeigefelder Flüssigkristallanzeigen. Diese können insbesondere als Zeilendisplays ausgebildet sein. Ein Vorteil der Flüssigkristallanzeige ist darin zu sehen, daß der Energieverbrauch relativ gering ist.

Besonders günstig ist es, wenn die Energie für die jeweilige Flüssigkristallanzeige und die Steuereinheit von einer Solarzelle erzeugt wird. Die Solarzelle kann am Anzeigefeld angeordnet und auf die Lichtquelle im Personenbeförderungsmittel ausgerichtet sein. Es erübrigt sich damit eine aufwendige Energieversorgung über Versorgungsleitungen, die im Personenbeförderungsmittel verlegt werden müssen.

Bei einer weiteren bevorzugten Ausführungsform werden die Daten von der zentralen Einheit über wenigstens die eine Sendeeinheit drahtlos zu den Steuereinheiten übertragen. Bei dieser Anordnung werden keine Übertragungsleitungen benötigt. Ein besonderer Vorteil der Anordnung ist darin zu sehen, daß sich die Anzeigefelder mit den Steuereinheiten relativ einfach in vorhandene Personenbeförderungsmittel einbauen lassen. Als Übertragungsmedium für die Daten können elektromagnetische Schwingungen, beispielsweise auch im Infrarot- oder sichtbaren Bereich, verwendet werden. Die Energie der Infrarot- oder Lichtwellen kann so groß eingestellt werden, daß zugleich mit der Datenübertragung die Energie zum Betreiben der Steuereinheit und des Anzeigefelds gewonnen wird.

Ein bevorzugtes Anwendungsgebiet der oben beschriebenen Anordnung sind Eisenbahnwagen.

Die Lichtquellen in den Reisezugwagen werden zweckmäßigerweise zur Übertragung der Belegungsdaten der einzelnen Sitze als auch zur Versorgung der Anzeigefelder und deren Steuerlogik mit Energie ausgenutzt. Die Lichtquellen werden insbesondere mit einer Speisespannung im Kilohertzbereich versorgt, die zur Übertragung der Belegungsdaten frequenzmoduliert wird.

Die Erfindung wird im folgenden anhand eines in einer Zeichnung dargestellten Ausführungsbeispiels näher beschrieben, aus dem sich weitere Einzelheiten, Merkmale und Vorteile ergeben.

Es zeigen:
- Fig. 1: ein Anzeigefeld für Belegungsdaten eines Sitzplatzes in einem Reisezugwagen von vorne;
- Fig. 2: ein Blockschaltbild einer Steuereinheit mit einem von dieser gespeisten Anzeigefeld;
- Fig. 3: ein Blockschaltbild einer anderen Steuereinheit mit einem von dieser gespeisten Anzeigefeld;
- Fig. 4: ein Reisezugwagen mit Anzeigefeldern im Schema und
- Fig. 5: eine aus mehreren nebeneinander und übereinander angeordneten Anzeigefeldern bestehende Gruppe von vorne.

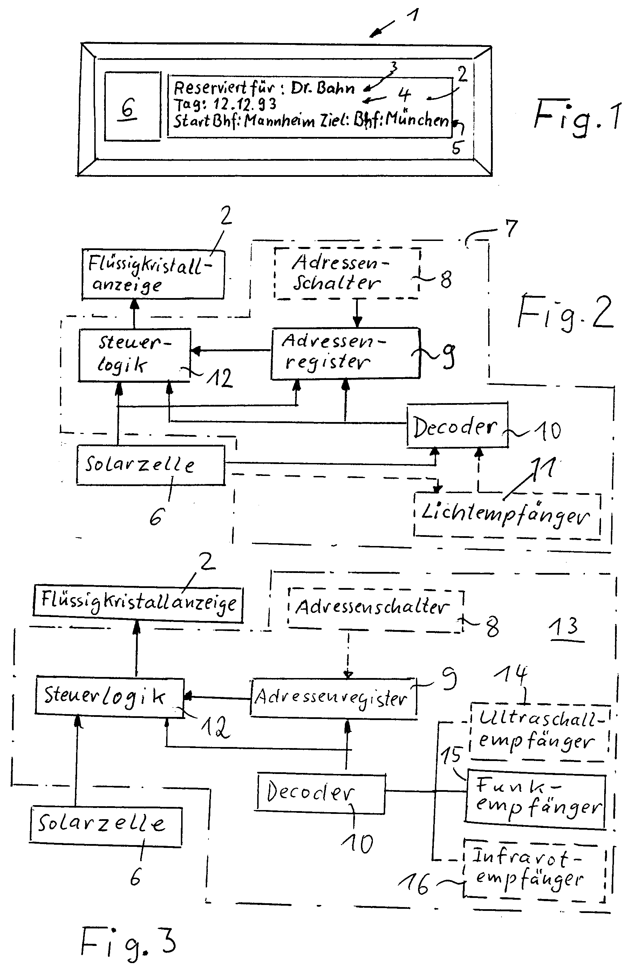

Eine Anzeigefeld 1 für Belegungsdaten von Sitzplätzen in einem Eisenbahn-Reisezugwagen weist eine Flüssigkristallanzeige 2 auf, die z. B. drei Zeilen 3, 4, 5 hat. In der obersten Zeile 3 wird z. B. der Name der Person angezeigt, für die der Sitzplatz reserviert ist, dem das Anzeigefeld 1 zugeordnet ist. Es kann auch eine Firma oder eine sonstige Kennzeichnung verwendet und angezeigt werden. In der nächsten Zeile 4 wird das Datum angezeigt, an dem der Sitzplatz reserviert ist. In der unteren Zeile 5 wird der Streckenabschnitt, Z. B. in Form eines Start- und Zielbahnhofs angezeigt, für den die Reservierung gilt. Neben der Flüssigkristallanzeige 2 ist im Anzeigefeld 1 eine Solarzelle 6 angeordnet, die zur Versorgung des Anzeigefelds 1 und der für dessen Betrieb vorgesehenen Steuereinheit 7 bestimmt ist, die in Fig. 2 oder 3 näher dargestellt ist.

Die in Fig. 2 im Blockschaltbild dargestellte Steuereinheit 7 ist für den Empfang von Telegrammen eingerichtet, mit denen die in den Zeilen 3 bis 5 der Flüssigkristallanzeige darzustellenden Daten bzw. Informationen übertragen werden. Jedem Anzeigefeld 1 ist eine eigene Adresse zugeordnet. Die Adresse wird an der Steuereinheit 7 eingestellt. Hierzu gibt es verschiedene Möglichkeiten. Es können an der Steuereinheit 7 Schalter 8 zur Einstellung der Adresse vorgesehen sein. Die Schalter 8 sind in Fig. 2 schematisch dargestellt. Daneben gibt es noch andere Möglichkeiten zur Einstellung von Adressen, z. B. Steckerelemente oder Brücken zur Überbrückung von Stiften, mit denen Potentiale weitergeleitet werden. Die mit den Adressenschaltern 8 oder anderen Mitteln eingestellten bzw. codierten Adressensignale stehen an einem Adressenregister 9 an, das als Vergleicher arbeitet. Das Adressenregister 9 hat weitere Eingänge, die mit einem Decoder 10 verbunden sind, der an einen Empfänger für das Telegramm angeschlossen ist.

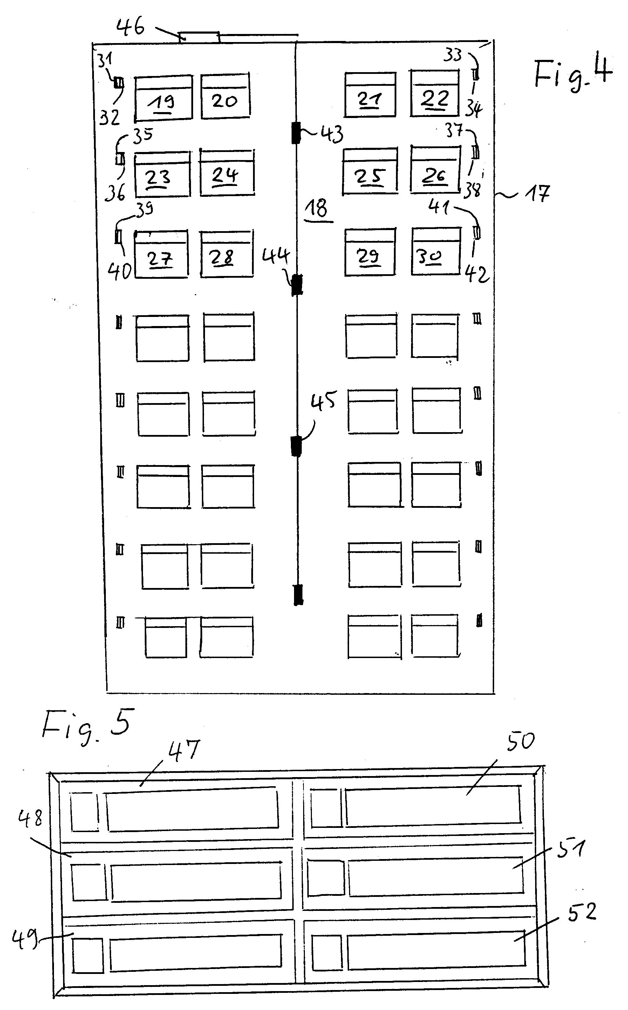

Bei der in Fig. 2 dargestellten Steuereinheit 7 ist der Empfänger als Lichtempfänger 11 ausgebildet, der die drahtlosen, als Lichtsignale übertragenen Telegramminformationen erhält. Die Telegramminformationen enthalten neben der Adresse Daten über die Belegung oder Nichtbelegung des der Steuereinheit 7 zugeordneten Sitzplatzes, das Datum der Belegung und den Ausgangs- und Zielbahnhof, zwischen denen der Sitzplatz reserviert ist. Die Telegramme werden von einer oder mehreren im Reisezugwagen angeordneten Sendeeinheiten abgestrahlt, die in Fig. 4 dargestellt sind. Die jeweilige Sendeeinheit strahlt z. B. modulierte Lichtsignale aus, die auf den jeweiligen Lichtempfänger 11 auftreffen, der entsprechende Signale an den Decoder 10 weiterleitet. Der Decoder 10 gibt die aus dem Telegramm abgeleitete Adresse an das Adressenregister 9 weiter, das bei Übereinstimmung zwischen der eingestellten und der empfangenen Adresse eine Steuerlogik 12 aktiviert, die weiterhin mit dem Decoder 10 verbunden ist und nach der Aktivierung die empfangenen Belegungsdaten in Steuersignale für die Flüssigkristallanzeige 2 umsetzt. Die Energie für die Steuerlogik 12, das Adressenregister 9, den Decoder 10 und den Lichtempfänger 11 wird von der Solarzelle 9 geliefert, die auf eine Lichtquelle im Reisezugwagen ausgerichtet ist.

Die im Reisezugwagen angeordnete, nicht dargestellte Sendeeinheit enthält insbesondere von einem Zuginformationsrechner als zentrale Einheit die Belegungsdaten der einzelnen Sitzplätze im Reisezugwagen. Der Zuginformationsrechner gibt an die verschiedenen Sendeeinheiten in den Reisezugwagen die für den jeweiligen Wagen vorgesehenen Informationen aus. Mit dem Zuginformationsrechner können die Sendeeinheiten über Leitungen verbunden sein.

Eine Steuereinheit mit geringem Aufwand ergibt sich, wenn die Solarzelle zugleich als Empfänger für die ausgesendeten Telegramme verwendet wird. Der Solarzelle 6 wird dann neben der Information die Energie in modulierter Form zugeführt. Die Lichtstärke ist so groß, daß die Energie zugleich für die Versorgung der Steuereinheit 7 ausreicht.

Anstelle von Licht kann für die Telegrammübertragung auch ein anderes Medium verwendet werden, das für drahtlose Übertragung geeignet ist. Die Fig. 2 zeigt eine Steuereinheit 13, bei der bis auf den Empfängerteil die Bauelemente denjenigen der Steuereinheit 7 entsprechen. Gleiche Bauelemente sind bei den in Fig. 2 und 3 dargestellten Steuereinheiten 7, 11 daher mit den gleichen Bezugsziffern versehen.

In Fig. 3 sind gestrichelt drei alternative Empfänger dargestellt. Es handelt sich um einen Ultraschallempfänger 14, einen Funkempfänger 15 oder einen Infrarotlichtempfänger 16. Je nach der Wahl des Übertragungsmediums ist einer dieser Empfänger an den Decoder 10 angeschlossen. Die Sendeeinheiten in den Reisezugwagen müssen auf die Art der Empfänger abgestimmt sein, d. h. es müssen Ultraschall-, Funk- oder Infrarotlichtsender vorhanden sein.
Die Fig. 4 zeigt schematisch einen Reisezugwagen 17, in dem in verschiedenen Reihen beiderseits eines Gangs 18 Sitzplätze mit 19, 20, 21, 22, 23, 24, 25, 26, 27, 28, 29 und 30 bezeichnet sind. Die weiteren Sitzplätze im Reisezugwagen 17 sind nicht näher bezeichnet. Für jedes Paar von Sitzplätzen, z. B. 19, 20 oder 21, 22 oder 23, 24 oder 25, 26 sind Anzeigefelder 31, 32, 33, 34, 35, 36, 37, 38, 39, 40 und 41, 42 vorhanden. Die Anzeigefelder 31 bis 42 entsprechen im Aufbau dem Anzeigefeld 1 mit der in Fig. 2 dargestellten Steuereinheit 7, wobei die Solarzellen 6 als Empfänger für modulierte Lichtwelle und Betriebsenergie ausgenutzt werden.

Im Reisezugwagen 17 sind jeweils für eine Gruppe von Sitzplätzen Leuchtstoffröhren 43, 44, 45 vorgesehen. Bei dem in Fig. 4 dargestellten Reisezugwagen 17 ist für acht Sitzplätze 19 bis 26 jeweils eine Leuchtstoffröhre 43 vorgesehen. Es kann daber auch für vier Sitzplätze je eine Leuchtstoffröhre vorhanden sein. Die Solarzellen 6 der Anzeigefelder 31 bis 42 sind auf die zugeordneten Leuchtstoffröhren 43, 44 ausgerichtet, so daß sie von eiem Lichtbündel mit hinreichender Lichtstärke beaufschlagt werden. Die Leuchtstoffröhren 43 bis 45 im Reisezugwagen 17 sind als Sendeeinheiten für moduliertes Licht an ein gemeinsames Lampensteuergerät 46 angeschlossen, das sich im Reisezugwagen 17 befindet und mit dem Zugrechner verbunden ist.

Das Lampensteuergerät 46 weist einen DC/AC-Wandler für insbesondere 15 kHz auf. Der Oszillator des Wandlers wird mit einem Steuersignal zur Erzeugung frequenzmodulierter Schwingungen beaufschlagt, mit der die Leuchtstoffröhren 43 bis 45 gespeist werden. Diese Schwingungen beinhalten die Telegramme mit Adressen und Belegungsdaten für die verschiedenen Anzeigefelder 31 bis 42 an den Sitzplätzen 19 bis 30.

Mehrere Anzeigefelder können auch zu einer Gruppe zusammengefaßt werden. Die Fig. 5 zeigt sechs Anzeigefelder 47, 48, 49, 50, 51, 52, die neben- bzw. übereinander angeordnet sind.

Mit der oben beschriebenen Anordnung lassen sich die Belegungsdaten der Sitzplätze 19 bis 30 selbsttätig vom Zugrechner aus einstellen bzw. aktualisieren. Es wird nicht mehr die Arbeitszeit des Personals für die Aufzeichnung von Belegungsdaten auf Papierzettel und deren Anbringung am Sitzplatz bzw. deren Entfernung benötigt. Lediglich dem Zugrechner muß ein Belegungsplan eingegeben werden, der z. B. auf einem Datenträger gespeichert ist, der von einem Buchungs- bzw. Reservierungsgerät beschrieben wird. Die oben beschriebenen Anordnung ist auch weniger anfällig gegen Irrtümer und Fehler als das bisherige Beschriften und Anbringen von Zettel durch Personal.

## Patentansprüche

1. System zur Anzeige von Informationen über die Belegung oder Nichtbelegung von reservierbaren Sitzplätzen in Personenbeförderungsmitteln,
**dadurch gekennzeichnet,**
daß an oder nahe an den Sitzplätzen (19...30) jeweils zur Anzeige alphanumerischer Daten durch elektrische Signale betätigbare Anzeigefelder (1; 31...42) vorgesehen sind, die je mit einer eine eigene Adresse aufweisenden Steuereinheit (7) verbunden sind, der von einer Sendeeinheit unter ihrer Adresse die anzuzeigenden Daten über die Belegung oder Nichtbelegung des jeweiligen Sitzplatzes zugeführt werden und daß die Sendeeinheit in dem für sich bewegbaren Personenbeförderungsmittel (17) angeordnet ist und Eingabeelemente für die Belegungsdaten aufweist.

2. System nach Anspruch 1,
**dadurch gekennzeichnet,**
daß die Anzeigefelder (31...42) Flüssigkristallanzeigen (2) aufweisen.

3. System nach Anspruch 1 oder 2,
**dadurch gekennzeichnet,**
daß die Energie für die Flüssigkristallanzeigen (2) und die Steuereinheiten (7) jeweils von Solarzellen (6) erzeugt werden.

4. System nach einem oder mehreren der vorhergehenden Ansprüche,
**dadurch gekennzeichnet,**
daß die Daten als Telegramme drahtlos zu den Steuereinheiten (7, 13) übertragen werden.

5. System nach einem oder mehreren der vorhergehenden Ansprüche,
**dadurch gekennzeichnet,**
daß als Übertragungsmedium Infrarotlicht vorgesehen ist.

6. System nach einem oder mehreren der Ansprüche 1 bis 4,
**dadurch gekennzeichnet,**
daß als Übertragungsmedium sichtbares Licht vorgesehen ist.

7. System nach einem oder mehreren der Ansprüche 1 bis 4,
**dadurch gekennzeichnet,**
daß als Übertragungsmedium Ultraschall vorgesehen ist.

8. System nach einem oder mehreren der Ansprüche 1 bis 4,
**dadurch gekennzeichnet,**
daß als Übertragungsmedium elektromagnetische Schwingungen im Funkwellenbereich vorgesehen sind.

9. System nach Anspruch 6,
**dadurch gekennzeichnet,**
daß als Sendeeinheiten Lichtquellen für die Beleuchtung des Reisezugwagens (17) vorgesehen sind und daß die Lichtquellen n die Telegramme frequenzmoduliert übertragen.

10. System nach Anspruch 9,
**dadurch gekennzeichnet,**
daß die Lichtquellen mit einem zentralen Zugrechner verbunden sind, der die Frequenzen der Lichtquellen entsprechend den Belegungsdaten der Sitzplätze steuert.
